# EUROPÄISCHE PATENTSCHRIFT

(11) **EP 2 108 851 B1**
(45) Veröffentlichungstag und Bekanntmachung des Hinweises auf die Patenterteilung: **04.07.2012**
(21) Anmeldenummer: 09154417.1
(22) Anmeldetag: 05.03.2009
(51) Int. Cl.: F16B 13/00

(54) **Spreizdübel**
Expansion dowel
Cheville à expansion

(30) Priorität: 08.04.2008 DE 102008001055
(43) Veröffentlichungstag der Anmeldung: 14.10.2009
(73) Patentinhaber: HILTI Aktiengesellschaft, 9494 Schaan (LI)
(72) Erfinder: Zimmerer, Claudia, 88131 Lindau (DE); Popp, Franz, 86807 Buchloe (DE); Daigeler, Erich, 86875 Waal (DE)

(56) Entgegenhaltungen:
- DE-A1- 3 111 241
- DE-A1- 3 206 290
- DE-A1- 3 301 389
- DE-U- 1 989 624
- DE-U1-202004 001 481

## Beschreibung

Die Erfindung betrifft einen Spreizdübel mit einem hülsenförmigen Dübelkörper, der ein erstes Dübelteil und zumindest ein axial daran anschliessendes zweites Dübelteil aufweist, und mit einer Verbindungseinrichtung, wobei beide Dübelteile von einem Spreizelement durchsetzbar und über die Verbindungseinrichtung miteinander verbindbar sind, wobei die Verbindungseinrichtung wenigstens eine Schnappverbindung aufweist, die an einem der Dübelteile ein eine Nocke umfassendes Eingreifmittel und am anderen Dübelteil ein eine Ausnehmung für die Nocke umfassendes Aufnahmemittel für das Eingreifmittel umfasst, und wobei an einem der Dübelteile, an dessen mit dem anderen Dübelteil in Anlage bringbaren Rand zumindest ein in axialer Richtung diesen Rand überragender Überlappungsabschnitt vorgesehen ist, der im zusammengefügten Zustand des Dübelkörpers zumindest bereichsweise axial mit dem anderen Dübelteil überlappt.

Eine gattungsgemässer Dübel ist aus der DE 31 11 241 A1 bekannt. Weitere mehrteilige Dübel gehen aus der DE 1 989 624 U, der DE 33 01 389 A1 und der DE 20 2004 001 481 U1 hervor.

Zur Befestigung von Teilen an Bauteilen, wie z. B. Wänden oder Decken, werden derartige Spreizdübel beispielsweise in einer Durchsteckmontage durch eine Öffnung in den zu befestigenden Teil in zuvor erstellte Bohrlöcher eingeführt und zur Verankerung im Untergrund mit einem Spreizelement, wie z. B. einer Spreizschraube im Bohrloch aufgeweitet. Der Dübelkörper weist an einem setzrichtungsseitigen Endbereich einen radial aufweitbaren Spreizbereich und einen daran anschliessenden Schaftbereich auf. Für unterschiedliche Dicken der zu befestigenden Teile werden Dübelkörper in unterschiedlichen Längen angeboten.

Aus der DE 199 28 633 A1 ist ein Spreizdübel mit einem hülsenförmigen Dübelkörper bekannt, der einen ersten Dübelteil und einen axial daran anschliessenden zweiten Dübelteil aufweist. Die Dübelteile sind von einem Spreizelement durchsetzbar und über eine Verbindungseinrichtung in Form einer Steckverbindung kraftschlüssig miteinander verbindbar. Im eingeführten Zustand kann sich die kraftschlüssige Steckverbindung zwischen den Dübelteilen lösen um Längsverformungen des setzrichtungsseitig vorderen Dübelteils auszugleichen. Die Dübelteile sind aus unterschiedlichen Kunststoffen gefertigt.

Nachteilig an der bekannten Lösung ist, dass sich insbesondere bei einer Durchsteckmontage des Dübelkörpers die beiden Dübelteile vor dem Einführen oder beim Einführen des Spreizelementes voneinander lösen können, und zwar bevor das Spreizelement den Spreizbereich für eine ausreichende Verankerung im Untergrund aufgeweitet hat.

Aufgabe der Erfindung ist es, einen Spreizdübel mit einem mehrteiligen, hülsenförmigen Dübelkörper zu schaffen, der ein verbessertes Setzverhalten aufweist.

Die Aufgabe ist durch die Merkmale des Anspruchs 1 gelöst. Vorteilhafte Weiterbildungen sind im Unteranspruch dargelegt. Ein Spreizdübel gemäss Anspruch 1 ist dadurch gekennzeichnet, dass an dem zumindest einen Überlappungsabschnitt wenigstens ein Rastmittel vorgesehen ist, das einen in Bezug auf die Dübellängsachse in axialer Richtung verlaufe den Hintergregabschnitt umfasst, und das im zusammengefügten Zustand des Dübelkörpers in wenigstens ein Gegenrastmittel am anderen Dübelteil eingreift, wobei das Gegenrastmittel einen in Bezug auf die Dübellängsachse in axialer Richtung verlaufenden Eingreifabschnitt zur Aufnahme des Hintergreifabschnitts umfasst.

Gemäss der Erfindung weist die Verbindungseinrichtung wenigstens eine Schnappverbindung auf, die an einem der Dübelteile ein Eingreifmittel und am anderen Dübelteil ein Aufnahmemittel für das Eingreifmittel umfasst.

Mit der Schnappverbindung wird eine formschlüssige Verbindung der Dübelteile im zusammengeführten Zustand geschaffen, wobei eine zuverlässige mechanische Verbindung zwischen den Dübelteilen und eine einfache Montage der Dübelteile zu einem hülsenförmigen Dübelkörper gewährleistet ist. Beim Zusammenführen der Dübelteile weitet sich zumindest ein mit dem anderen Dübelteil in Verbindung bringbarer Abschnitt des Dübelteils auf, der entsprechende elastische Eigenschaften aufweist, oder dieser wird beim Zusammenführen der Dübelteile zusammengedrückt, so dass das Eingreifmittel in das entsprechend ausgebildete Aufnahmemittel eingreift. Unabhängig von der Ausgestaltung des Spreizelementes und des daraus resultierenden Setzvorgangs, d. h. egal ob dieses schlagend oder drehend gesetzt wird, sind die Dübelteile in axialer sowie in umfänglicher Richtung unverlierbar aneinander gehalten. Ein Mitdrehen beispielsweise des den Spreizbereich aufweisenden Dübelteils beim Aufweiten mittels einer in den hülsenförmigen Dübelkörper eingeschraubten Spreizschraube ist mit der geschaffenen formschlüssigen Verbindung verhindert. Die Verbindungseinrichtung kann nur wenigstens eine Schnappverbindung oder alternativ eine Kombination z. B. einer Steckverbindung und wenigstens einer Schnappverbindung aufweisen.

Üblicherweise ist der Spreizbereich bei derartigen Spreizdübeln, insbesondere in Bezug auf dessen Länge, immer gleich ausgebildet und die Ausgestaltung beziehungsweise die Länge des Schaftbereichs variiert entsprechend der erforderlichen Gesamtlänge des Spreizdübels. Mit dem erfindungsgemässen Dübelkörper lassen sich die Dübelteile beliebig kombinieren. Weiter lassen sich auch Dübelteile aus Materialien mit unterschiedlichen Eigenschaften, die beispielsweise ansonsten nicht miteinander verbindbar sind, sicher miteinander verbinden.

Das Material für die Fertigung der Dübelteile lässt sich entsprechend den Anforderungen an das entsprechende Dübelteil wählen und muss nicht mehr auf die höchsten Anforderungen eines der Dübelteile abgestimmt sein. Der Schaftbereich hat beispielsweise lediglich eine Führungsfunktion für das Spreizelement und kann damit aus einem kostengünstigeren Werkstoff hergestellt werden als der Spreizbereich, an den höhere Anforderungen gestellt werden. Aufgrund der Möglichkeit, die einzelnen Dübelteile unabhängig voneinander herstellen zu können, wird deren Herstellung massgeblich vereinfacht und insgesamt die Fertigung des Spreizdübels wirtschaftlicher, was bei einem Massenprodukt, wie es derartige Spreizdübel darstellen ein wesentlicher Vorteil ist.

Vorteilhaft ist die Schnappverbindung lösbar ausgebildet, so dass ein versehentlich zusammengefügter Dübelkörper wieder in seine Einzelteile zerlegbar und weiter vorteilhaft wieder zu einem neuen Dübelkörper zusammenführbar ist.

Vorteilhaft ist zumindest ein Dübelteil aus einem Kunststoff gefertigt, was eine einfache und kostengünstige Fertigung des Dübelkörpers gewährleistet. Besonders vorteilhaft sind alle Dübelteile aus Kunststoffen gefertigt, wobei die Dübelteile aus unterschiedlichen Kunststoffen gefertigt sein können, welche z. B. unterschiedliche Eigenschaften und/oder chemische Strukturen aufweisen. Infolge der separaten Herstellung der Dübelteile verkürzen sich bei der Verwendung von Kunststoffen die Fliesswege und damit die Zykluszeiten der einzelnen Teile im Spritzgussverfahren, was die Produktion massgeblich erleichtert.

Erfindungsgemäss umfasst das Eingreifmittel eine Nocke und das Aufnahmemittel eine Ausnehmung für die Nocke, welche ein einfaches Zusammenführen und eine sichere Verbindung zwischen den Dübelteilen gewährleisten. Die Nocke ist beispielsweise an dem zweiten, den Schaftbereich ausbildenden Dübelteil und die Ausnehmung für die Nocke ist an dem ersten, den Spreizbereich aufweisenden Dübelteil vorgesehen.

Das Aufnahmemittel für die Nocke als Eingreifmittel kann beispielsweise als Vertiefung oder Öffnung ausgebildet sein.

Erfindungsgemäss ist an einem der Dübelteile, an dessen mit dem anderen Dübelteil in Anlage bringbaren Rand zumindest ein in axialer Richtung diesen Rand überragender Überlappungsabschnitt vorgesehen, der im zusammengefügten Zustand des Dübelkörpers zumindest bereichsweise axial mit dem anderen Dübelteil überlappt. Dies ermöglicht eine einfache Ausgestaltung der Schnappverbindung, welche vorteilhaft im Bereich des Überlappungsabschnitts im zusammengeführten Zustand des Dübelkörpers vorgesehen ist. Die Wandstärke des Überlappungsabschnitts ist vorteilhaft geringer als die Wandstärke im übrigen Bereich des entsprechenden Dübelteils ausgebildet, so dass sich der Überlappungsabschnitt beim Zusammenführen der Dübelteile leicht ausweichen beziehungsweise verformen kann, bis das Eingreifmittel in das Aufnahmemittel der Schnappverbindung eingreift.

Erfindungsgemäss ist an dem zumindest einen Überlappungsabschnitt wenigstens ein Rastmittel vorgesehen, das im zusammengefügten Zustand des Dübelkörpers in wenigstens ein Gegenrastmittel am anderen Dübelteil eingreift. Über die Rastverbindung wird der Überlappungsabschnitt im zusammengeführten Zustand des Dübelkörpers am anderen Dübelteil sicher gehalten und kann bei der Montage des Spreizdübels nicht nach aussen oder innen ausweichen, womit eine einfache Montage ohne Behinderung durch einen abstehenden Überlappungsabschnitt gewährleistet ist.

Erfindungsgemäss umfasst das wenigstens eine Rastmittel einen Hintergreifabschnitt und das Gegenrastmittel einen Eingreifabschnitt zur Aufnahme des Hintergreifabschnitts, wobei für eine vorteilhafte Verbindung der Eingreifabschnitt vorteilhaft komplementär zum Hintergreifabschnitt ausgebildet ist.

Erfindungsgemäss verlaufen der Hintergreifabschnitt und der Eingreifabschnitt in Bezug auf die Dübellängsachse in axialer Richtung, was ein einfaches Zusammenführen der Dübelteile sowie eine einfache Fertigung bei Gewährleistung einer sicheren Verbindung zwischen dem Überlappungsabschnitt und dem anderen Dübelteil sicherstellt.

Bevorzugt ist der zumindest eine Überlappungsabschnitt über ein Schwenkgelenk an einem der Dübelteile angeordnet, so dass nach dem Zusammenführen der Dübelteile der Überlappungsabschnitt zum anderen Dübelteil schwenkbar ist. Ist die Schnappverbindung im Bereich der Überlappungsabschnitte vorgesehen, wird beim Verschwenken die formschlüssige Verbindung zwischen den Dübelteilen geschaffen.

Die Erfindung wird nachstehend anhand von Ausführungsbeispielen näher erläutert. Es zeigen:
- Fig. 1: Ein erstes Ausführungsbeispiel eines Spreizdübels mit hülsenförmigen Dübelkörper in Seitenansicht;
- Fig. 2: der Dübelkörper in einem Längsschnitt entlang Linie II-II in Fig. 1;
- Fig. 3: der Dübelkörper in einem Querschnitt entlang Linie III-III in Fig. 1; und
- Fig. 4: ein zweites Ausführungsbeispiel eines Spreizdübels mit hülsenförmigen Dübelkörper in einem Längsschnitt.

Grundsätzlich sind in den Figuren gleiche Teile mit den gleichen Bezugszeichen versehen.

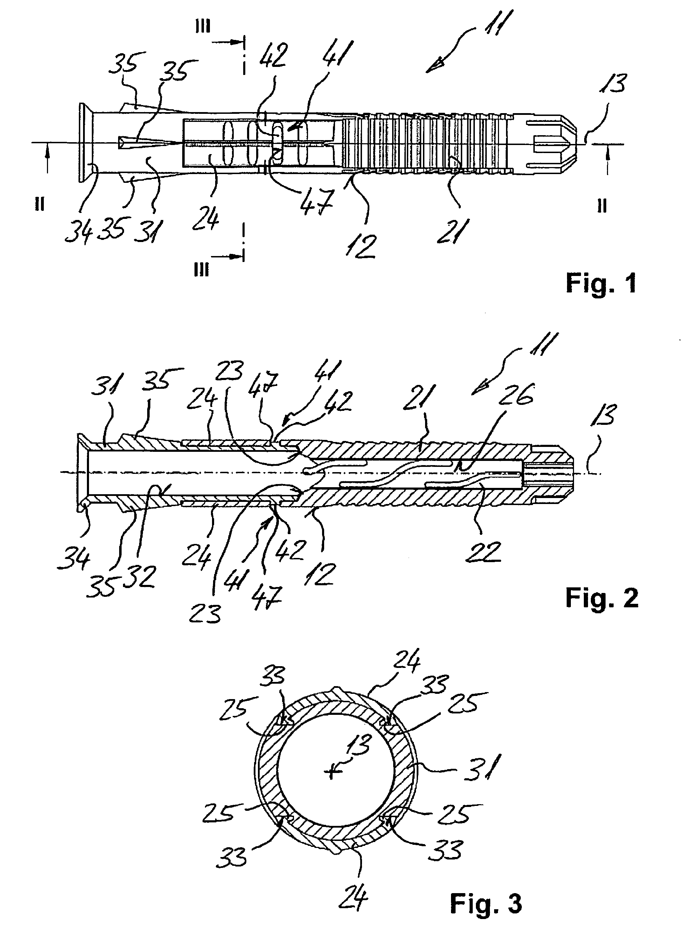

Der in den Figuren 1 bis 3 dargestellte Spreizdübel 11 weist einen hülsenförmigen Dübelkörper 12 auf, der sich entlang einer Dübellängsachse 13 erstreckt sowie ein erstes, setzrichtungsseitig vorderes Dübelteil 21 mit einem Spreizbereich 22 und ein axial daran anschliessendes zweites Dübelteil 31 mit einem Schaftbereich 32 aufweist. Beide Dübelteile 21 und 31 sind von einem hier nicht dargestellten Spreizelement, wie z. B. einer Spreizschraube oder Spreiznagel, durchsetzbar und über eine Schnappverbindung 41 miteinander verbindbar. Das erste Dübelteil 21, das den Spreizbereich 22 aufweist, ist aus einem hochwertigen Kunststoff, wie z. B. Polyamid (PA) gefertigt. Das zweite Dübelteil 31 mit dem Schaftbereich 32 ist aus einem weniger hochwertigen Kunststoff, wie z. B. Polyethylen (PE) oder Polypropylen (PP) gefertigt.

An dem ersten Dübelteil 21 sind an dessen mit dem zweiten Dübelteil 31 in Anlage bringbaren Rand 23 zwei, in axialer Richtung diesen Rand 23 überragende Überlappungsabschnitte 24 vorgesehen, die diametral gegenüberliegend angeordnet sind und im zusammengefügten Zustand des Dübelkörpers 12 bereichsweise axial mit dem zweiten Dübelteil 31 überlappen. Die Schnappverbindung 41 ist im Bereich der Überlappungsabschnitte 24 vorgesehen. Die Schnappverbindung 41 umfasst als Eingreifmittel 42 eine an dem zweiten Dübelteil 31 angeordnete, radial abragende Nocke und am ersten Dübeiteil 21 als ein Aufnahmemittel 47 eine Ausnehmung für das Eingreifmittel 42. Aufgrund der elastischen Eigenschaften der beiden Dübelteile 21 und 31 weitet sich beispielsweise das erste Dübelteil 21 im Bereich der Überlappungsabschnitte 24, so dass die Dübelteile 21 und 31 einfach zuammensteckbar sind. Sobald die Überlappungsabschnitte 24 sich in einer Position zum Hintergreifen der Eingreifmittel 42 am zweiten Dübelteil 31 befinden, schnappen diese ein und die beiden Dübelteile 21 und 31 sind formschlüssig miteinander verbunden.

An den in axialer Richtung verlaufenden Seitenrändern der Überlappungsabschnitte sind jeweils in axialer Richtung verlaufende Hintergreifabschnitte als Rastmittel 25 vorgesehen, die im zusammengefügten Zustand des Dübelkörpers 12 in ebenfalls in axialer Richtung verlaufende Eingreifabschnitte als Gegenrastmittel 33 am zweiten Dübelteil 31 eingreifen.

In der dargestellten Ausführungsform ist nur im ersten Dübelteil 21 ein von einem hier nicht dargestellten Spreizelement aufweitbares Spreizloch 26 vorgesehen. Das Spreizloch 26 kann sich jedoch auch bis in das zweite Dübelteil erstrecken, so dass beim Eintreiben des Spreizelementes der Dübelkörper auch im Bereich, in dem die Schnappverbindung 41 vorgesehen ist, aufweitbar ist beziehungsweise ein vormontiertes Spreizelement bereits im zweiten Dübelteil 31 während der Montage des Spreizdübels 11 gehaltenen ist.

Am freien Ende des zweiten Dübelteils 31 ist ein radial abragender Kragenabschnitt 34 als Einschubbegrenzung für den Spreizdübel 11 vorgesehen. Weiter sind vier radial abragende, keilförmige Flügelelemente 35 vorgesehen, die umfänglich gleichmässig verteilt an der Aussenseite des zweiten Dübelteils 31 vorgesehen sind und als Verdrehsicherung des gesetzten Spreizdübels 11 beim Eintreiben des hier nicht dargestellten Spreizelementes dienen.

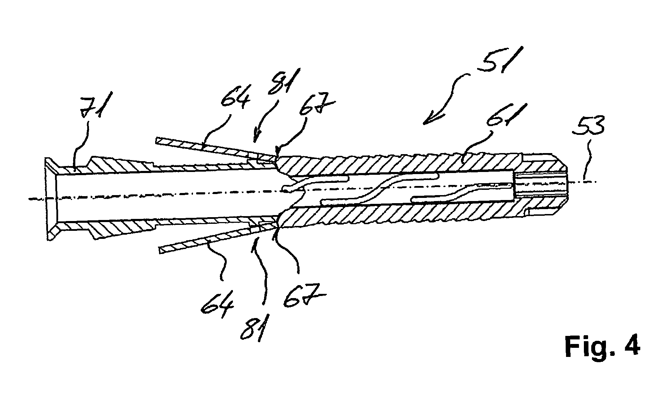

In der Figur 4 ist eine Variante eines erfindungsgemässen Spreizdübels 51 dargestellt, der in den wesentlichen Teilen dem zuvor beschriebenen Spreizdübel 11 entspricht. Im Unterschied dazu sind die Überlappungsabschnitte 64 am ersten Dübelteil 61 über ein Schwenkgelenk 67 an dem ersten Dübelteil 61 angeordnet, so dass nach dem Zusammenführen des ersten Dübelteils 61 mit dem zweiten Dübelteil 71 diese zur Verriegelung der beiden Dübelteile 61 und 71 jeweils zur Dübellängsachse 53 hin verschwenkbar sind, wobei die Schnappverbindungen 81 einschnappen und die formschlüssige Verbindung zwischen den beiden Dübelteilen 61 und 71 gewährleistet ist.

## Patentansprüche

1. Spreizdübel mit einem hülsenförmigen Dübelkörper (12), der ein erstes Dübelteil (21; 61) und zumindest ein axial daran anschliessendes zweites Dübelteil (31; 71) aufweist, und mit einer Verbindungseinrichtung, wobei beide Dübelteile (21, 31; 61, 71) von einem Spreizelement durchsetzbar und über die Verbindungseinrichtung miteinander verbindbar sind, wobei
die Verbindungseinrichtung wenigstens eine Schnappverbindung (41; 81) aufweist, die an einem der Dübelteile (31; 71) ein eine Nocke umfassendes Eingreifmittel (42) und am anderen Dübelteil (21; 61) ein eine Ausnehmung für die Nocke umfassendes Aufnahmemittel (47) für das Eingreifmittel (42) umfasst,
und wobei an einem der Dübelteile (21; 61), an dessen mit dem anderen Dübelteil (31; 71) in Anlage bringbaren Rand (23) zumindest ein in axialer Richtung diesen Rand (23) überragender Überlappungsabschnitt (24; 64) vorgesehen ist, der im zusammengefügten Zustand des Dübelkörpers (12) zumindest bereichsweise axial mit dem anderen Dübelteil (31; 71) überlappt,
**dadurch gekennzeichnet,**
**dass** an dem zumindest einen Überlappungsabschnitt (24) wenigstens ein Rastmittel (25) vorgesehen den ist, das einen in Bezug auf die Dübellängsachse (13; 53) in axialer Richtung verlaufen den Hintergreifabschnitt umfasst, und das im zusammengefügten Zustand des Dübelkörpers (12) in wenigstens ein Gegenrastmittel (33) am anderen Dübelteil (31) eingreift, wobei das Gegenrastmittel (33) einen in Bezug auf die Dübellängsachse (13; 53) in axialer Richtung verlaufenden Eingreifabschnitt zur Aufnahme des Hintergreifabschnitts umfasst.

2. Spreizdübel nach Anspruch 1, **dadurch gekennzeichnet, dass** der zumindest eine Überlappungsabschnitt (64) über ein Schwenkgelenk (67) an einem der Dübelteile (61) angeordnet ist.

## Claims

1. Expansion dowel with a tube shaped dowel body (12), which has a first dowel part (21; 61) and at least a second dowel part (31; 71) axially connected to it, and with a connection device, in which both dowel parts (21, 31; 61, 71) may be penetrated by an expansion element and may be connected to each other through the connection device, in which
the connection device has at least one snap connection (41; 81), which on one of the dowel parts (31; 71) comprises a means of engagement (42) comprising a cam and on the other dowel part (21; 61) comprises a means of accommodation (47) comprising a recess for the cam for the means of engagement (42),
and in which on one of the dowel parts (21; 61), on the edge (23), which may be brought into an arrangement with the other dowel part (31; 71), at least one overlapping section (24; 64) projecting over this edge (23) in the axial direction is provided, which axially overlaps the other dowel part (31; 71) at least in parts in the state when the dowel body (12) is joined together,
**characterised in that**,
on the at least one overlapping section (24) at least one catch device (25) is provided, which comprises a rear gripping section running in an axial direction with reference to the longitudinal axis of the dowel (13; 53) and which engages in at least one counter catch device (33) on the other dowel part (31) in the state when the dowel body (12) is joined together, in which the counter catch device (33) comprises an engaging section running in an axial direction with reference to the longitudinal axis of the dowel (13; 53) for accommodating the rear gripping section.

2. Expansion dowel according to claim 1, **characterised in that** the at least one overlapping section (64) is arranged on one of the dowel parts (61) through a swivel joint (67).

## Revendications

1. Cheville à expansion comportant un corps de cheville en forme de douille (12) qui inclut une première partie de cheville (21 ; 61) et au moins une seconde partie de cheville (31 ; 71) axialement adjacente à celle-ci, et un dispositif de liaison, dans laquelle les deux parties de cheville (21, 31 ; 61 ; 71) peuvent être traversées par un élément d'expansion et sont reliées l'une à l'autre par l'intermédiaire du dispositif de liaison,
dans laquelle le dispositif de liaison comporte au moins une liaison à encliquetage (41 ; 81) qui inclut, sur l'une des parties de cheville (31 ; 71) des moyens de prise (42) incluant une came et, sur l'autre partie de cheville (21 ; 61), des moyens (47) incluant un évidement pour la came, pour la réception des moyens de prise (42),
et dans laquelle sur l'une des parties de cheville (21 ; 61), sur laquelle est prévue au moins une partie de chevauchement (24 ; 64) faisant saillie dans une direction axiale d'un bord (23) pouvant venir en butée contre l'autre partie de cheville (31 ; 71), laquelle partie de chevauchement chevauche, au moins dans certaines zones, axialement l'autre partie de cheville (31 ; 71) une fois le corps de cheville (12) assemblé, **caractérisée en ce que**
sur la au moins une partie de chevauchement (24) sont prévus au moins des moyens de verrouillage (25) qui incluent une partie de prise arrière s'étendant dans la direction axiale par rapport à l'axe longitudinal de cheville (13 ; 53) et qui viennent en prise avec au moins des moyens de verrouillage complémentaires (33) sur l'autre partie de cheville (31) une fois le corps de cheville (12) assemblé, dans laquelle les moyens de verrouillage complémentaires (33) incluent une partie de prise s'étendant dans la direction axiale par rapport à l'axe longitudinal de cheville (13 ; 53) pour la réception de la partie de prise arrière.

2. Cheville à expansion selon la revendication 1, **caractérisée en ce que** la au moins une partie de chevauchement (64) est agencée sur l'une des parties de cheville (61) par l'intermédiaire d'une articulation pivotante (67).
